# EUROPEAN PATENT SPECIFICATION

(11) **EP 4 010 251 B1**
(45) Date of publication and mention of the grant of the patent: **25.11.2026**
(21) Application number: 20874356.7
(22) Date of filing: 06.08.2020
(51) Int. Cl.: B64D 13/02

(54) **CABIN PRESSURE SENSOR (CPS) SYSTEM FOR PRESSURIZED-CABIN AIRCRAFT AND ASSOCIATED METHODS**
KABINENDRUCKSENSOR (CPS)-SYSTEM FÜR DRUCKKABINE EINES FLUGZEUGS UND ZUGEHÖRIGE VERFAHREN
SYSTÈME DE CAPTEURS DE PRESSION DE CABINE (CPS) POUR AÉRONEF À CABINE PRESSURISÉE ET PROCÉDÉS ASSOCIÉS

(30) Priority: 06.08.2019 US 201962883161 P
(43) Date of publication of application: 15.06.2022
(73) Proprietor: Telles, Angel, Rockledge FL 32955 (US); Roof, Nicholas, Deland FL 32720 (US); Oakley, Christopher, Cocoa FL 32926 (US); Heick,, Edward, Cocoa Beach FL 32931 (US)
(72) Inventor: Telles, Angel, Rockledge FL 32955 (US); Roof, Nicholas, Deland FL 32720 (US); Oakley, Christopher, Cocoa FL 32926 (US); Heick,, Edward, Cocoa Beach FL 32931 (US)
(74) Representative: Gregorj S.r.l.
(86) International application number: PCT/US2020/070374
(87) International publication number: WO 2021/072414

(56) References cited:
- WO-A1-2018/153821
- CN-A- 101 085 645
- US-A1- 2002 173 263
- US-A1- 2002 173 263
- US-A1- 2003 157 875
- US-A1- 2009 306 839
- US-A1- 2010 076 711
- US-A1- 2017 247 112
- US-A1- 2017 247 112
- US-A1- 2017 259 936
- US-A1- 2017 337 830
- US-A1- 2019 025 054
- US-A1- 2019 106 218
- US-B1- 7 710 253
- US-B1- 9 242 725

## Description

### Field of the Invention

The present invention relates to systems and methods for sensing pressure within the pressurized cabin of an aircraft.

### Background

Aircraft crew members and/or passengers have been incapacitated due to hypoxia resulting from the loss of cabin pressure at high altitudes or from venturing into high altitudes in pressurized aircraft. Hypoxia is defined as an insufficient supply of oxygen to the body's tissues that insidiously affects the central nervous system and organs. The most dangerous condition leading to hypoxia may be the cabin pressure being slowly depleted because of a malfunctioning pressurization system or a slow, yet significant leak, has developed in the pressurized cabin or cockpit of an airplane. With crewmembers and passengers unaware, they may either simply fall asleep or be otherwise incapacitated eventually resulting in death.

The Federal Aviation Administration (FAA) has published requirements that define cabin pressure altitudes and time profiles that require the use of supplemental oxygen by the aircraft crew members and passengers. Cabin pressure altitude is the equivalent altitude above mean sea level at which the barometric pressure would equal the pressure in the aircraft cabin. According to the FAA's Airman's Information Manual, human performance can seriously deteriorate within fifteen minutes at a cabin pressure altitude of 15,000 feet (1 foot corresponding to 0.3048 m) Mean Sea Level (MSL). The ability to take corrective and protective action is lost in 20 to 30 minutes at 18,000 feet, and in 5 to 12 minutes at 20,000 feet, which is followed soon after by unconsciousness. The FAA has thus required that supplemental oxygen be used anytime the cabin pressure altitude in civil aviation aircraft operations exceeds either 12,500 feet for 30 minutes, or 14,000 feet for any amount of time. These values for commercial aircraft operations are lower, 10,000 feet and 12,000 feet, respectively.

Though many aircraft are fitted with cabin pressurization monitoring and alerting systems, there are situations where the on-board system fails or is manually bypassed, thus rendering the occupants or crew totally unaware of a deteriorating or low oxygen environment. A need therefore exists for a redundant alert option for the pressure monitoring system that cannot be readily bypassed and is not dependent on operation of other on-board systems.

This background information is provided to reveal information believed by the applicant to be of possible relevance to the present invention. No admission is necessarily intended, nor should be construed, that any of the preceding information constitutes prior art against the present invention.
US2002173263A1 relates to a controller, a cabin pressure control system and a method for controlling pressure in an aircraft cabin.

US2010076711A1 discloses, according to its abstract, a method of auto-calibrating aircraft cabin pressure sensors in a cabin pressure control system while in service, wherein at a constant sensed cabin pressure during a cruise flight phase at least one pressure sensor output voltage from each of two cabin pressure sensors are recorded. Upon landing and opening of the cabin doors the sensed cabin pressure value is compared to an external field pressure. A new software slope variable and a new software offset variable are computed for the pressure/voltage function using an average computed pressure value in cruise and the recorded field atmospheric pressure sensor voltage value on the ground. Thereafter, a new cabin pressure value is calculated and control software is modified.

### Summary of the Invention

With the above in mind, embodiments of the present invention are related to systems, devices and methods for monitoring cabin pressure and may include an associated touch screen display for viewing data and inputting commands.

The Cabin Pressure Sensor (CPS) may be installed in an aircraft with a pressurized cabin to alert the pilot in command of a possible pressure leak. Ideal installation is for new, civilian aircraft during assembly, but any aircraft can be retrofitted including private/civilian, commercial, or military style fixed wing airplanes. The normal human body requires greater than 94% oxygen saturation with no impairment; a value of less than 88% requires supplemental oxygen, 65% to 56% can cause impaired medical functions, and less than 55% could result in unconsciousness, leading to death.

The innovation of the CPS is that the product is a Non-Required Safety Enhancing Equipment (NORSEE) product as defined by the U.S. Department of Transportation Federal Aviation Administration (FAA). As a NORSEE product this product does not interfere with the existing FAA aircraft certification rating that was delivered at the aircraft production buyoff.

This device is an aftermarket add-on to any pressurized aircraft that can be properly installed by an authorized FAA mechanic. CPS provides redundancy alert option to the aircraft's pressurization warning system. Display of information on cockpit display area encompasses a five inch (5") wide X six-half (6 ½") (12. 7 cm X 16.51 cm) glass display screen for easy viewing and command input requests.

The system can help to eliminate a common problem with crewmembers and passengers. Since the system monitors the increasing cabin pressure outside of the pilot's control, the pilot is eliminated as a point of failure and/or possible ethical violation. With the data logging capabilities, operation of, and possible tampering with, the control unit can be determined or verified.

### Brief Description of the Drawings

FIG. 1 is a bock diagram of a cabin pressure sensor system according to an embodiment of the invention.
FIG. 2 is a flow diagram illustrating a method of operation of a CPS system according to an embodiment of the invention.
FIG. 3 is a flow diagram illustrating an autocalibration process according to an embodiment of the invention.
FIG. 4 is a flow diagram illustrating another method of operation of a CPS system according to another embodiment of the invention.
FIG. 5 is a flow diagram illustrating another method of operation of a CPS system according to another embodiment of the invention.

### Detailed Description of the Invention

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Those of ordinary skill in the art realize that the following descriptions of the embodiments of the present invention are illustrative and are not intended to be limiting in any way. Other embodiments of the present invention will readily suggest themselves to such skilled persons having the benefit of this disclosure. Like numbers refer to like elements throughout.

Before describing the present disclosure in detail, it is to be understood that this disclosure is not limited to parameters of the particularly exemplified systems, methods, apparatus, products, processes, and/or kits, which may, of course, vary. It is also to be understood that the terminology used herein is only for the purpose of describing particular embodiments of the present disclosure and is not necessarily intended to limit the scope of the disclosure in any particular manner. Thus, while the present disclosure will be described in detail with reference to specific embodiments, features, aspects, configurations, etc., the descriptions are illustrative and are not to be construed as limiting the scope of the claimed invention. Various modifications can be made to the illustrated embodiments, features, aspects, configurations, etc. without departing from the scope of the invention as defined by the claims. Thus, while various aspects and embodiments have been disclosed herein, other aspects and embodiments are contemplated.

Unless defined otherwise, all technical and scientific terms used herein have the same meaning as commonly understood by one of ordinary skill in the art to which the present disclosure pertains.

Various aspects of the present disclosure, including devices, systems, methods, etc., may be illustrated with reference to one or more exemplary embodiments or implementations. As used herein, the terms "embodiment," "alternative embodiment" and/or "exemplary implementation" means "serving as an example, instance, or illustration," and should not necessarily be construed as preferred or advantageous over other embodiments or implementations disclosed herein. In addition, reference to an "implementation" of the present disclosure or invention includes a specific reference to one or more embodiments thereof, and vice versa, and is intended to provide illustrative examples without limiting the scope of the invention, which is indicated by the appended claims rather than by the following description.

It will be noted that, as used in this specification and the appended claims, the singular forms "a," "an" and "the" include plural referents unless the content clearly dictates otherwise. Thus, for example, reference to a "sensor" includes one, two, or more sensors.

As used throughout this application the words "can" and "may" are used in a permissive sense (i.e., meaning having the potential to), rather than the mandatory sense (i.e., meaning must). Additionally, the terms "including," "having," "involving," "containing," "characterized by," variants thereof (e.g., "includes," "has," and "involves," "contains," etc.), and similar terms as used herein, including the claims, shall be inclusive and/or open-ended, shall have the same meaning as the word "comprising" and variants thereof (e.g., "comprise" and "comprises"), and do not exclude additional, un-recited elements or method steps, illustratively. Any altitudes indicated throughout this description typically refer to "Mean Sea Level" (MSL).

Various aspects of the present disclosure can be illustrated by describing components that are coupled, attached, connected, and/or joined together. As used herein, the terms "coupled", "attached", "connected," and/or "joined" are used to indicate either a direct connection between two components or, where appropriate, an indirect connection to one another through intervening or intermediate components. In contrast, when a component is referred to as being "directly coupled", "directly attached", "directly connected," and/or "directly joined" to another component, no intervening elements are present or contemplated. Thus, as used herein, the terms "connection," "connected," and the like do not necessarily imply direct contact between the two or more elements. In addition, components that are coupled, attached, connected, and/or joined together are not necessarily (reversibly or permanently) secured to one another. For instance, coupling, attaching, connecting, and/or joining can comprise placing, positioning, and/or disposing the components together or otherwise adjacent in some implementations.

As used herein, directional and/or arbitrary terms, such as "top," "bottom," "front," "back," "left," "right," "up," "down," "upper," "lower," "inner," "outer," "internal," "external," "interior," "exterior," "proximal," "distal" and the like can be used solely to indicate relative directions and/or orientations and may not otherwise be intended to limit the scope of the disclosure, including the specification, invention, and/or claims.

Where possible, like numbering of elements have been used in various figures. In addition, similar elements and/or elements having similar functions may be designated by similar numbering. Furthermore, alternative configurations of a particular element may each include separate letters appended to the element number. Accordingly, an appended letter can be used to designate an alternative design, structure, function, implementation, and/or embodiment of an element or feature without an appended letter. Similarly, multiple instances of an element and or sub-elements of a parent element may each include separate letters appended to the element number. In each case, the element label may be used without an appended letter to generally refer to instances of the element or any one of the alternative elements. Element labels including an appended letter can be used to refer to a specific instance of the element or to distinguish or draw attention to multiple uses of the element. However, element labels including an appended letter are not meant to be limited to the specific and/or particular embodiment(s) in which they are illustrated. In other words, reference to a specific feature in relation to one embodiment should not be construed as being limited to applications only within the embodiment.

It will also be appreciated that where a range of values (e.g., less than, greater than, at least, and/or up to a certain value, and/or between two recited values) is disclosed or recited, any specific value or range of values falling within the disclosed range of values is likewise disclosed and contemplated herein.

It is also noted that systems, methods, apparatus, devices, products, processes, compositions, and/or kits, etc., according to certain embodiments of the present invention may include, incorporate, or otherwise comprise properties, features, aspects, steps, components, members, and/or elements described in other embodiments disclosed and/or described herein. Thus, reference to a specific feature, aspect, steps, component, member, element, etc. in relation to one embodiment should not be construed as being limited to applications only within said embodiment. In addition, reference to a specific benefit, advantage, problem, solution, method of use, etc. in relation to one embodiment should not be construed as being limited to applications only within the embodiment.

The headings used herein are for organizational purposes only and are not meant to be used to limit the scope of the description or the claims. To facilitate understanding, like reference numerals have been used, where possible, to designate like elements common to the figures.

Oxygen levels drop at roughly 0.5% every thousand feet above sea level as seen below. The magic number most commercial and military planes pressurize their cabins to is 6000-6800 feet MSL. FAA Regulation 14 CFR 91.211 states: Supplemental Oxygen (a) General, No person may operate a civil aircraft of U.S. registry - (1) At cabin pressure altitudes above 12,500 feet (MSL) up to and including 14,000 feet (MSL) unless the required minimum flight crew is provided with and uses supplemental oxygen for that part of the flight at those altitudes that is of more than 30 minutes duration; (2) At cabin pressure altitudes above 14,000 feet (MSL) unless the required minimum flight crew is provide with and uses supplemental oxygen during the entire flight time at those altitudes; and (3) At cabin pressure altitudes above 15,000 feet (MSL) unless each occupant of the aircraft is provided with supplemental oxygen. This provides a safety net where the pilot can react to any issues.

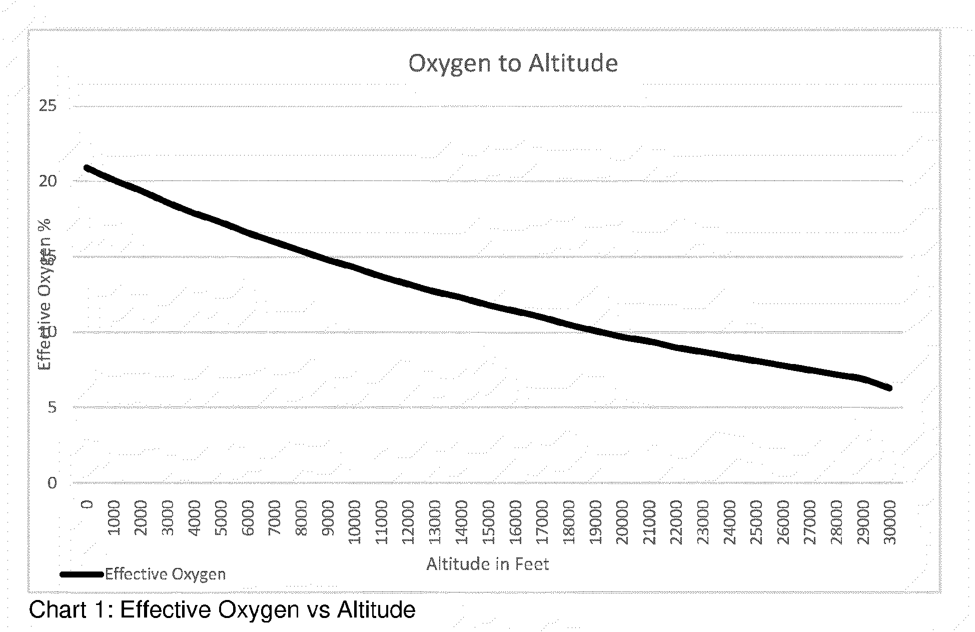

The pressure sensor is based off the NXP Integrated Pressure Sensor. With the initial function testing using a potentiometer (Variable Resistor) to simulate the analog voltage of the sensor as in *the graph below, we* were able to determine that the formula needed to calculate the altitude was indeed working correctly.

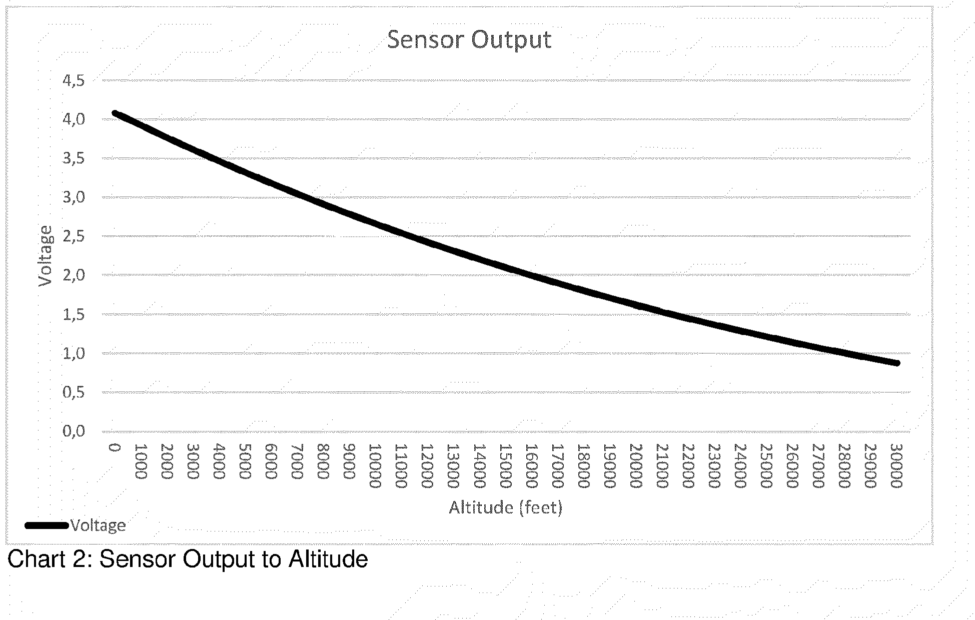

Later moving to the actual sensor wired up to the CPM unit and utilizing a vacuum chamber to further simulate the drop-in pressure as the plane would climb in altitude. In our initial findings, the sensor needed a calibration offset to display the correct altitude. This was a simple modification to the program which allowed the data to show the correct altitude.

The current test used to simulate a flight was to program a Rigol 832 Power Supply to change voltage values over a course of three hours as shown in the graph below This allowed us to simulate a flight where all four alarms would trigger, and thus, showing how a pilot would interpret the information on the screen. Later, the flight data was recorded onto an memory card was extracted and interpreted. The data is logged every minute the unit is turned on, a new file is created for each flight. This data will allow us to see if the unit is properly functioning and/or allowing an FAA representative to use the data to prove the outcome of an uncommanded or uncontrolled cabin pressurization differential, positive correction by a pilot, or failure of a system or subsystem resulting in an incapacitation, incident or accident fatality of one or more crewmembers or passengers, onboard the aircraft while the system is installed and operational.

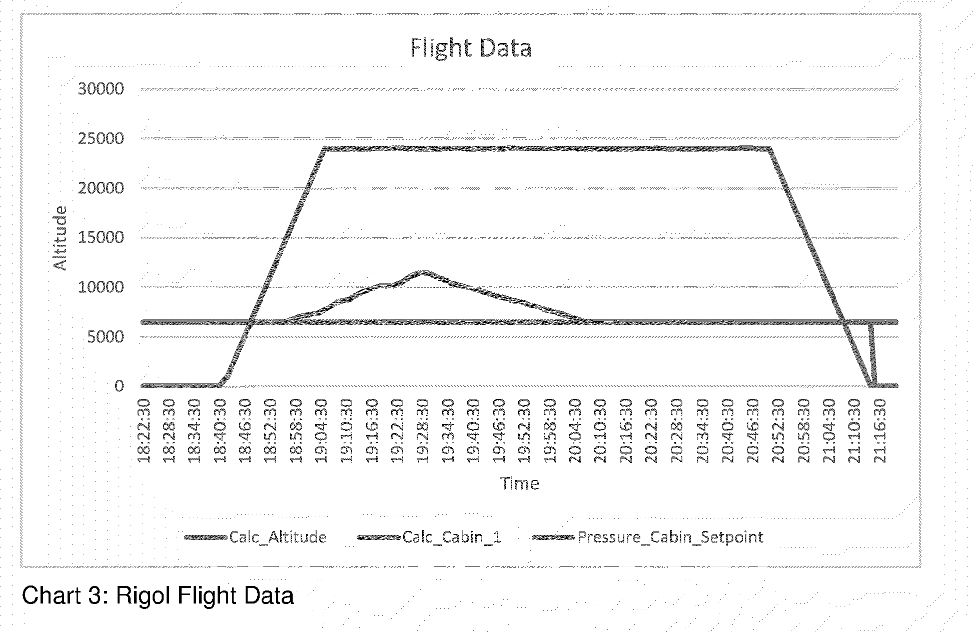

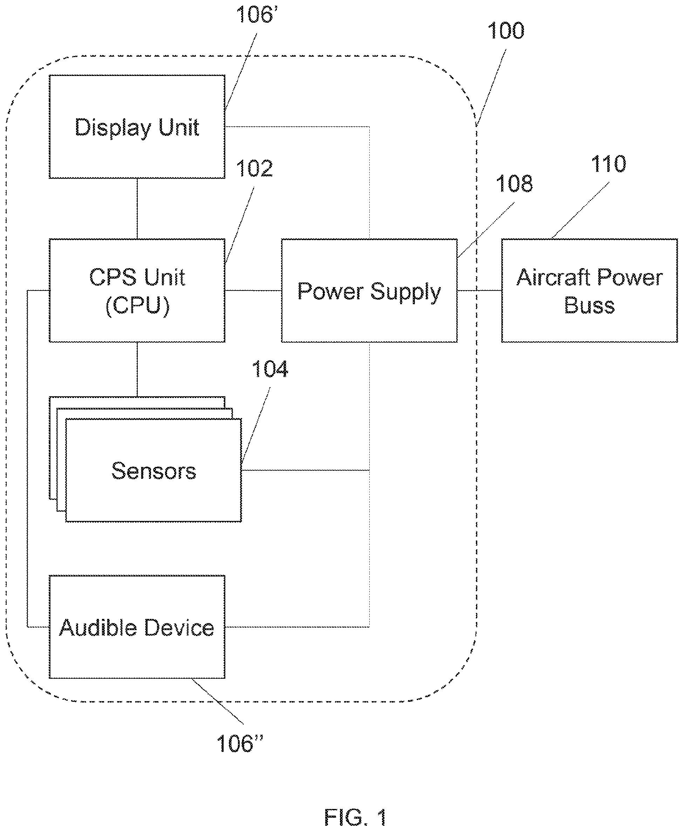

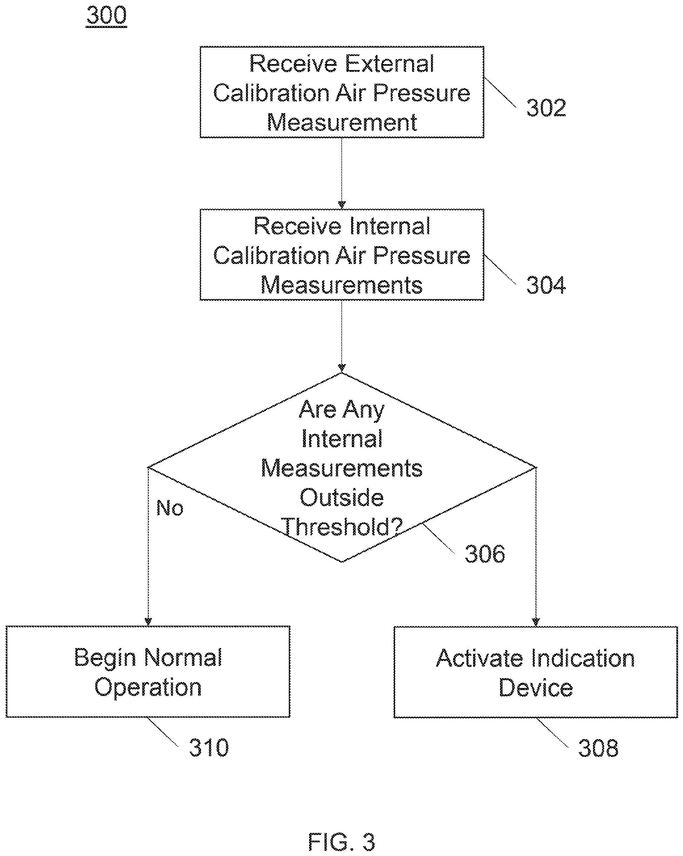

With reference to FIGS. 1-5, example embodiments of the system, device and method according to features of the present invention will be described.

The Cabin Pressure Sensor, herein called the CPS, is a standalone yet redundant system to the factory installed aircraft cabin pressurization system. The CPS also provides validation that the static system is functioning nominal while on the ground. CPS is defined as a closed loop system that provides continuous feedback and informs the pilot what part of the CPS hardware has failed.

The CPS is defined by the FAA as a Non-Required Safety Enhancing Equipment (NORSEE). CPS is integrated for use with the factory installed avionics display cockpit equipment. The only direct electrical connection to the aircraft's original system is power: 28VDC bus. This is accomplished via bulkhead feed to the aircraft's cockpit display panel to provide DC electrical power to the installed CPS unit. Once the aircraft is powered up, the CPS is "on" and will be powered until the aircraft is powered off. Pressure differential is determined by a single pressure line installed on the firewall bulkhead from the non-pressurized area of the aircraft to the CPS unit itself.

With specific reference to FIG. 1, a cabin air pressure sensor system 100 according to an embodiment of the invention is presented. The system 100 comprises a CPS unit 102, a plurality of sensors 104, one or more indication devices 106, in this embodiment comprising a display unit 106' and an audible device 106", such as a buzzer or speaker, and a power supply 108. The power supply 108 may be electrically coupled to each of the CPS unit 102, the indication devices 106, and the plurality of sensors 104. The power supply 108 may comprise circuitry capable of receiving electrical power from the aircraft power buss 110 in any voltage as is known in the art, including AC and DC voltage within any voltage range, and converting that received electrical power to the electrical power needed by the other components of the system 100, primarily being DC voltage. Moreover, the connection between the power supply 108 and the aircraft power buss 110 may be the only electrical connection between the system 100 and the aircraft; the system 100 may be otherwise electrically isolated from all other aircraft systems.

The CPS unit 102 may be configured to perform all calculations, processes data from sensors, and the indication devices. The CPS unit may comprise components necessary to perform these functions, including, but not limited to, a central processing unit (CPU) such as a processor, a microprocessor, an integrated circuit (IC), a field programmable gate assembly (FPGA), and the like. The CPS Unit 102 may further comprise a storage device, such as a hard disk drive (HDD), a solid-state drive (SSD), a flash drive, an SD card, or other storage medium as is known in the art, to store data thereon. All data metadata processed by the CPU is stored within the storage device of the CPS unit 102. Furthermore, the CPS unit 102 may comprise a communication device necessary to communicate with the plurality of sensors 104 and the indication devices 106, including, but not limited to, serial devices, such as a universal serial bus (USB) device, an 802.xx wireless communication device such as a Bluetooth device, a Z-wave device, a Zigbee device, or a Wi-Fi device, an audio output device, and/or a display device such as a video display controller that is capable of transmitting display information across any known video standard, including high-definition multimedia interface (HDMI) device, USB, and the like.

The plurality of sensors 104 comprise a plurality of air pressure sensors operable to measure ambient air pressure as are known in the art, including, but not limited to, force collector-type sensors. The plurality of sensors 104 may be positioned throughout the pressurized cabin area of the aircraft, and one sensor of the plurality of sensors 104 is positioned in an area outside the pressurized area of the aircraft but still within the aircraft, such as, for instance, the nose cone.

The indication devices 106 may also be operated responsive to the capabilities of the given indication device. For example, the display unit 106' may be operable to display information received from the CPS unit 102 and the audible device 106" may emit sound responsive to receiving a signal from the CPS unit 102, that sound being either a buzzing if the audible device 106" is a buzzer, or more complex sound, such as a siren or spoken words if the audible device 106" is a speaker.

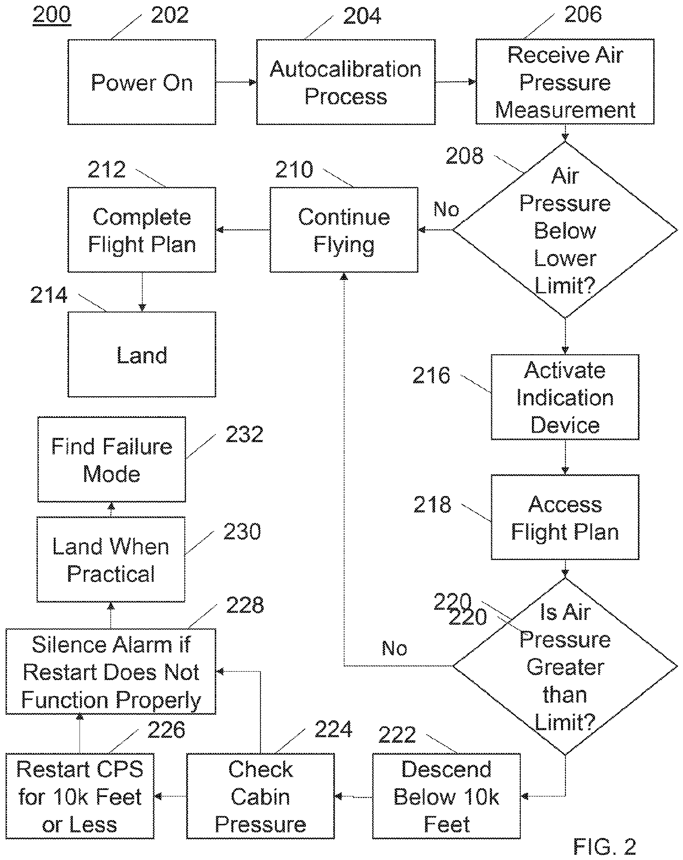

Referring now to FIG. 2, a method 200 of operating a cabin pressure sensor system according to an embodiment of the invention is presented. Upon powering on at step 202, the CPS system is configured to perform an autocalibration process 204 to ensure the CPS system is operating nominally, particularly determining if any of the plurality of sensors is operating anomalously. Upon completing the autocalibration process, the CPS system may begin receiving air pressure measurements 206 from the plurality of air pressure sensors as the aircraft takes off, proceeds along its flight plan, and lands. As air pressure measurements are received, the CPS system may determine at step 208 whether each air pressure measurement is beneath a minimum air pressure limit. This limit may be programmed by the pilot using a user input, which in some embodiments may be a touchscreen display unit. If none of the air pressure measurements received by the CPS system are below that limit, then the aircraft may continue flying along its flight plan at step 210, complete its flight plan at step 212, and land at step 214. When the aircraft power is shut off, the CPS system will similarly power down.

If, at step 208, an air pressure measurement is identified as being below the limit, the method 200 may continue at step 216 with the operation of the indication device, e.g. displaying a warning on a display device, operating an audible device to emit a warning siren or spoken warning to convey the anomalous measurement, or illuminating an indicating light to indicate the anomalous measurement. The method 200 may continue at step 218 with the pilots accessing the flight plan to determine one or both of whether they will be able to descend to a safe altitude, such as 10,000 feet or below, and the nearest landing opportunity.

At step 220, air pressure measurements received subsequent to the air pressure measurement identified as being below the minimum limit at step 208 will continue to be received and similarly evaluated to determine if they are below the minimum pressure limit at step 220. If no subsequent measurements are below the limit, the method 200 may continue to step 210 as described above. If, at step 220, a subsequent measurement is determined to be below the limit, the pilots may then proceed to step 222 with the descending of the aircraft to an altitude below 10,000 feet. The flight crew assesses the situation to descend the aircraft below 10,000 feet (if possible, based on flight terrain profile). If not possible to descend the aircraft, the pilot crew will use supplemental oxygen in flight time between 12,500 to 14,000 feet MSL if altitude exceeds the thirty-minute time limit set forth in the Federal Aviation Regulations. During this time, the CPS Display Unit continues to display the reported anomaly and the auditory alarm can by manually silenced.

Upon descending to such an altitude, the cabin pressure may be checked again at step 224. In some embodiments, the CPS may be restarted to operate in an alternative mode intended for when the aircraft is at an altitude of 10,000 feet or less at step 226. The CPS can only be reset upon correction of the noted anomaly on the ground or during flight by dropping below the set limit point (if possible, based on flight terrain profile) within the control system. The method 200 may then proceed to step 228, where the operation of the indication device may be terminated if the CPS still indicates an unsafe cabin pressure, as descending to below 10,000 feet should result in an air pressure measurement that is within the variance limit. The pilot can only silence the auditory sound and a displayed warning will remain until the anomaly is validated and the CPS is reset. The method 200 may continue with landing the aircraft when practical at step 230 and finding the failure mode at step 232, i.e. what caused the loss of pressure within the cabin.

After a successful landing, the aircraft maintenance department should troubleshoot and correct the noted anomaly.

Various features of the CPS include a closed-loop feedback system, providing a redundant system to the aircraft's primary cabin pressure system, prevention of cabin pressures encountered prior to flight or in-flight operations, an easy to understand Light Emitting Diode (LED) indicator display unit, an audible alarm independent of the aircraft alerting system, a CPS programmable logic controller (PLC) configured to perform an autocalibration process to determine the CPS system health.

The autocalibration process mentioned above is performed by the CPS's control system and on startup is used to validate that the CPS system within designated nominal operational limits. Upon completion of autocalibration, CPS checks the static pressure against the established set limit within the Cabin Pressure Controller (CPC) which is set by the pilot. Should a discrepancy occur at this check point, an anomalous hardware fault with the CPC may be indicated, prompting further check. Otherwise, the system is nominal and crew can proceed with the completion of aircraft ground checklist. The CPC check is a redundant function that is repeated every time prior to flight, and a validation that the CPC and its associated system hardware is nominal. Current aircraft CPC is manually validated when the system malfunctions or every 24 months as mandated by FAA regulation.

The control system autocalibration verifies that the CPS pressure sensors, in embodiments being at least four sensors, with in some embodiments one pressure sensor installed in the nose cone of the aircraft's unpressurized area and the remaining pressure sensors installed in the pressurized cabin area are operational. The CPS pressure sensors comprise first and second air pressure sensor positioned in the pressurized cabin area and a third air pressure sensor positioned in the unpressurized area of the aircraft. The method 300 comprises receiving an external calibration air pressure measurement from the air pressure sensor positioned in the unpressurized area of the aircraft at step 302. The method 300 continues at step 304, where internal calibration air pressure measurements are received from the air sensors in the areas of the aircraft that will be pressurized during flight. At step 306, the internal calibration air pressure measurements are compared to the external calibration air pressure measurement to determine if they exceed a threshold variance. Such a threshold variance may be pre-programmed or may be set by the pilot. Should any of the internal measurements exceed the threshold variance at step 306, the faulty or suspected pressure sensor anomaly may be reported and displayed in the CPS Display Unit or otherwise indicated by activating the indication device at step 308, in the cockpit display panel. In addition, the control system will data log the anomalous condition for future troubleshooting. The flight crew makes a real-time assessment whether the flight can continue or is grounded until repair is performed, if required, in accordance with the FAA, aircraft operations manual, or company procedures. If no internal measurements exceed the threshold variance, the method 300 may continue at 310 with the normal operation of the CPS system.

As mentioned above, the autocalibration process may be performed upon startup, and may further be performed prior to takeoff. The autocalibration process comprises receiving air pressure measurements from the cabin of the aircraft that will be pressurized when in flight, but is not yet pressurized, defining internal calibration air pressure measurements. The autocalibration process further comprises receiving an air pressure measurement from the air pressure sensor positioned in the unpressurized area of the aircraft, defining an external calibration air pressure measurement. The internal air pressure measurements is then compared to the external air pressure measurement to determine if they are outside a calibration tolerance of the external air pressure measurement, the calibration tolerance being pre-programmed and reflecting an acceptable level of variation in air pressure measurements between air pressure sensors. In some embodiments, the calibration tolerance may be within a range from 1% to 4% of the air pressure measurement of the external calibration air pressure measurement.

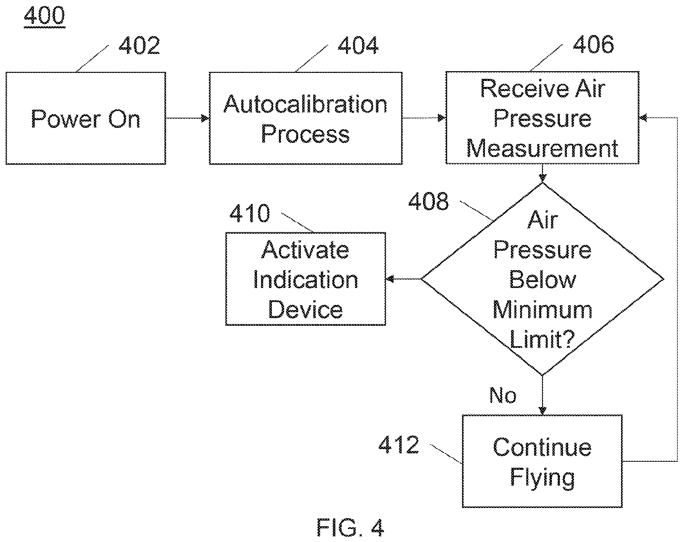

Referring now to FIG. 4, another method 400 according to an embodiment of the invention is presented. The method 400 begins at step 402 with powering on the CPS and continues with the autocalibration process at step 404, similar to as described above. The method 400 may continue at step 406 with receiving air pressure measurements from air pressure sensors positioned within the pressurized areas of the cabin of the aircraft. At step 408, the air pressure measurements that have been received are compared to a minimum air pressure limit, which may be set as described above. If any measurements are identified as being below the limit, the method 400 may continue at step 410 by activating the indication device as described above. If no measurements are identified as being below the limit, the method 400 may continue at step 412 with the pilots continuing to fly and the method returning to step 406 by receiving subsequent air pressure measurements.

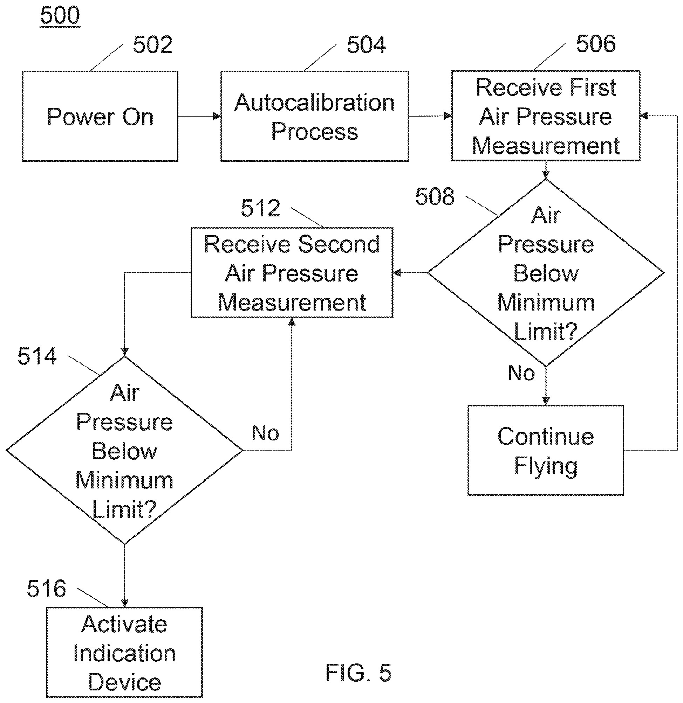

Referring now to FIG. 5, another method 500 according to an embodiment of the invention is presented. The method 500 begins at step 502 with powering on the CPS and continues with the autocalibration process at step 404, similar to as described above. The method 500 may continue at step 506 with receiving air pressure measurements from air pressure sensors positioned within the pressurized areas of the cabin of the aircraft. At step 508, the air pressure measurements that have been received are compared to a minimum air pressure limit, which may be set as described above. If no measurements are identified as being below the limit, the method 500 may continue at step 510 with the pilots continuing to fly and the method returning to step 506 by receiving subsequent air pressure measurements. If any measurements are identified as being below the limit, the method 500 may continue at step 512 by receiving subsequent air pressure measurements and at step 514 by again comparing the subsequently received air pressure measurements to the minimum air pressure limit. If no measurements are below the limit, the method 500 may return to step 512. If any measurement is identified as being below the limit, the method 500 may continue at step 516 by activating the indication device.

The components may be implemented by one or more processors or computers. It will be apparent that systems and/or methods, described herein, may be implemented in different forms of hardware, firmware, or a combination of hardware and software. The actual specialized control hardware or software code used to implement these systems and/or methods is not limiting of the implementations. Thus, the operation and behavior of the systems and/or methods were described herein without reference to specific software code-it being understood that software and hardware can be designed to implement the systems and/or methods based on the description herein.

As may also be used herein, the terms "processor", "module", "processing circuit", and/or "processing unit" (e.g., including various modules and/or circuitries such as may be operative, implemented, and/or for encoding, for decoding, for baseband processing, etc.) may be a single processing device or a plurality of processing devices. Such a processing device may be a microprocessor, micro-controller, digital signal processor, microcomputer, central processing unit, field programmable gate array, programmable logic device, state machine, logic circuitry, analog circuitry, digital circuitry, and/or any device that manipulates signals (analog and/or digital) based on hard coding of the circuitry and/or operational instructions. The processing module, module, processing circuit, and/or processing unit may have an associated memory and/or an integrated memory element, which may be a single memory device, a plurality of memory devices, and/or embedded circuitry of the processing module, module, processing circuit, and/or processing unit. Such a memory device may be a read-only memory (ROM), random access memory (RAM), volatile memory, non-volatile memory, static memory, dynamic memory, flash memory, cache memory, and/or any device that stores digital information. Note that if the processing module, module, processing circuit, and/or processing unit includes more than one processing device, the processing devices may be centrally located (e.g., directly coupled together via a wired and/or wireless bus structure) or may be distributedly located (e.g., cloud computing via indirect coupling via a local area network (LAN) and/or a wide area network (WAN)). Further note that if the processing module, module, processing circuit, and/or processing unit implements one or more of its functions via a state machine, analog circuitry, digital circuitry, and/or logic circuitry, the memory and/or memory element storing the corresponding operational instructions may be embedded within, or external to, the circuitry comprising the state machine, analog circuitry, digital circuitry, and/or logic circuitry. Still further note that, the memory element may store, and the processing module, module, processing circuit, and/or processing unit executes, hard coded and/or operational instructions corresponding to at least some of the steps and/or functions illustrated in one or more of the Figures. Such a memory device or memory element can be included in an article of manufacture.

The present invention has been described above with the aid of method steps illustrating the performance of specified functions and relationships thereof. The boundaries and sequence of these functional building blocks and method steps have been arbitrarily defined herein for convenience of description. Alternate boundaries and sequences can be defined so long as the specified functions and relationships are appropriately performed. Any such alternate boundaries or sequences are thus within the scope and spirit of the claimed invention. Further, the boundaries of these functional building blocks have been arbitrarily defined for convenience of description. Alternate boundaries could be defined as long as the certain significant functions are appropriately performed. Similarly, flow diagram blocks may also have been arbitrarily defined herein to illustrate certain significant functionality. To the extent used, the flow diagram block boundaries and sequence could have been defined otherwise and still perform the certain significant functionality. Such alternate definitions of both functional building blocks and flow diagram blocks and sequences are thus within the scope and spirit of the claimed invention. One of average skill in the art will also recognize that the functional building blocks, and other illustrative blocks, modules and components herein, can be implemented as illustrated or by discrete components, application specific integrated circuits, processors executing appropriate software and the like or any combination thereof.

The present invention may have also been described, at least in part, in terms of one or more embodiments. An embodiment of the present invention is used herein to illustrate the present invention, an aspect thereof, a feature thereof, a concept thereof, and/or an example thereof. A physical embodiment of an apparatus, an article of manufacture, a machine, and/or of a process that embodies the present invention may include one or more of the aspects, features, concepts, examples, etc. described with reference to one or more of the embodiments discussed herein. Further, from figure to figure, the embodiments may incorporate the same or similarly named functions, steps, modules, etc. that may use the same or different reference numbers and, as such, the functions, steps, modules, etc. may be the same or similar functions, steps, modules, etc. or different ones.

The above description provides specific details, such as material types and processing conditions to provide a thorough description of example embodiments. However, a person of ordinary skill in the art would understand that the embodiments may be practiced without using these specific details.

Some of the illustrative aspects of the present invention may be advantageous in solving the problems herein described and other problems not discussed which are discoverable by a skilled artisan. While the above description contains much specificity, these should not be construed as limitations on the scope of any embodiment, but as exemplifications of the presented embodiments thereof. Many other ramifications and variations are possible within the teachings of the various embodiments.

While the invention has been described with reference to exemplary embodiments, it will be understood by those skilled in the art that various changes may be made without departing from the scope of the invention. In addition, many modifications may be made to adapt a particular situation or material to the teachings of the invention without departing from the scope thereof. Therefore, it is intended that the invention not be limited to the particular embodiment disclosed as the best or only mode contemplated for carrying out this invention, but that the invention will include all embodiments falling within the scope of the appended claims.

Also, in the drawings and the description, there have been disclosed exemplary embodiments of the invention and, although specific terms may have been employed, they are unless otherwise stated used in a generic and descriptive sense only and not for purposes of limitation, the scope of the invention therefore not being so limited. Moreover, the use of the terms first, second, etc. do not denote any order or importance, but rather the terms first, second, etc. are used to distinguish one element from another. Furthermore, the use of the terms a, an, etc. do not denote a limitation of quantity, but rather denote the presence of at least one of the referenced item. Thus, the scope of the invention should be determined by the appended claims, and not by the examples given.

## Claims

1. A cabin pressure sensor system (100) for an aircraft comprising:
a plurality of air pressure sensors (104) positioned within an aircraft environment, the plurality of air pressure sensors (104) comprising at least four sensors and being configured to measure air pressure within the aircraft environment, the plurality of air pressure sensors (104) comprising:
a first air pressure sensor configured to measure air pressure positioned within a first pressurized area of a cabin of the aircraft; and
a second air pressure sensor configured to measure air pressure positioned within a second pressurized area of the cabin;
an indication device (106);
a central processing unit (CPU) (102) electrically coupled to the plurality of air pressure sensors (104) and the indication device (106), the CPU (102) comprising a defined minimum cabin pressure limit, the CPU (102) being configured to:
receive air pressure measurements from each of the first air pressure sensor and the second air pressure sensor, defining received air pressure measurements;
identify received air pressure measurements that are below the minimum cabin air pressure limit, defining an anomalous cabin air pressure measurement; and
operate the indication device (106) responsive to identifying an anomalous cabin air pressure measurement; and
a power supply device (108) electrically coupled to the CPU, the plurality of air pressure sensors (104), and the indication device (106),
wherein the plurality of air pressure sensors (104) further comprises a third air pressure sensor positioned within an unpressurized area of the aircraft, the plurality of air pressure sensors (104) further comprising also a fourth pressure sensor positioned in a pressurized area of a cabin of the aircraft,
wherein the CPU (102) is further configured to perform an autocalibration process, and
wherein the autocalibration process comprises the steps of:
receiving an external calibration air pressure measurement from the third air pressure sensor;
receiving prior to take off an internal calibration air pressure measurement from each of the first air pressure sensor and the second air pressure sensor and the fourth pressure sensor from the cabin of the aircraft that will be pressurized when in flight but is not yet pressurized;
comparing the internal calibration air pressure measurement from each of the first air pressure sensor and the second air pressure sensor and the fourth pressure sensor to the external calibration air pressure measurement;
identifying any internal calibration air pressure measurements that are outside a calibration tolerance from the external calibration air pressure measurement, defining a calibration anomaly; and
operating the indication device (106) responsive to identifying a calibration anomaly.

2. The system of claim 1, wherein the third air pressure sensor is positioned in the nose cone of the unpressurized area of the aircraft.

3. The system of claim 1 or 2 wherein:
the power supply device (108) is electrically coupled to an aircraft power bus; and
the cabin pressure sensor system (100) is electrically isolated from all aircraft systems other than the aircraft power bus.

4. The system of any of claims 1 through 3 wherein the CPU (102) is further configured to:
identify a first received air pressure measurement from the first air pressure sensor that is below the minimum cabin air pressure limit, defining a first anomalous cabin air pressure measurement;
identify a second received air pressure measurement from the second air pressure sensor that is below the minimum cabin air pressure movement, defining a second anomalous cabin air pressure measurement; and
operate the indication device (106) responsive to identifying a second anomalous cabin air pressure measurement.

5. The system of claim 1 or 2 or 3 or 4 wherein the CPU (102) is configured to perform the autocalibration process prior to takeoff of the aircraft.

6. The system of any of claims 1 through 5 wherein the indication device (106) comprises at least one of a display device (106'), an illumination device, and an auditory signal device (106").

7. The system of claim 6 wherein:
the indication device (106) comprises a plurality of light-emitting diodes (LEDs), the plurality of LEDs comprising a first LED configured light within a first wavelength range in the visible spectrum and a second LED configured to emit light within a second wavelength range of the visible; and
the CPU (102) is configured to operate the first LED responsive to no identification of an anomalous cabin air pressure measurement and to operate the second LED responsive to identifying an anomalous cabin air pressure measurement.

8. The system of claim 7 wherein the CPU (102) is configured to operate the auditory signal device (106") comprised by the indication device (106) responsive to identifying an anomalous cabin air pressure measurement.

9. The system of claim 7 wherein the CPU (102) is configured to provide at least one of a graphical indication and a textual indication on the display device (106') of the indication device (106) responsive to identifying an anomalous cabin air pressure measurement.

10. A method of monitoring cabin pressure sensor system (100) for an aircraft using a cabin air pressure monitoring system comprising a plurality of air pressure sensors (104) positioned within the aircraft, the plurality of air pressure sensors (104) comprising at least four sensors and being configured to measure air pressure within an aircraft environment, comprising at least a first air pressure sensor and a second air pressure sensor, an indication device (106), a central processing unit (CPU) electrically coupled to the plurality of air pressure sensors (104) and the indication device (106) and comprising a minimum cabin pressure limit, and a power supply electrically coupled to the plurality air pressure sensors, the CPU, and the indication device (106), the method comprising the steps of:
receiving at the CPU (102) air pressure measurements from each of the first air pressure sensor and the second air pressure sensor, defining received air pressure measurements;
identifying using the CPU (102) received air pressure measurements that are below the minimum cabin air pressure limit, defining an anomalous cabin air pressure measurement; and
operating the indication device (106) responsive to identifying an anomalous cabin air pressure measurement,
wherein the plurality of air pressure sensors (104) further comprises a third air pressure sensor positioned within an unpressurized area of the aircraft, the method further comprising performing an autocalibration process, the plurality of air pressure sensors (104) further comprising also a fourth pressure sensor positioned in a pressurized area of a cabin of the aircraft, and
wherein the autocalibration process comprises the steps of:
receiving at the CPU (102) an external calibration air pressure measurement from the third air pressure sensor;
receiving at the CPU (102) an internal calibration air pressure measurement from each of the first air pressure sensor and the second air pressure sensor and the fourth pressure sensor from the cabin of the aircraft that will be pressurized when in flight but is not yet pressurized;
comparing using the CPU (102) the internal calibration air pressure measurement from each of the first air pressure sensor and the second air pressure sensor and the fourth pressure sensor to the external calibration air pressure measurement;
identifying using the CPU (102) any internal calibration air pressure measurements that are outside a calibration tolerance from the external calibration air pressure measurement, defining a calibration anomaly; and
operating the indication device (106) responsive to identifying a calibration anomaly.

11. The method of claim 10, wherein the third air pressure sensor is positioned in the nose cone of the unpressurized area of the aircraft.

12. The method of claim 10 or 11 further comprising:
identifying using the CPU (102) a first received air pressure measurement from the first air pressure sensor that is below the minimum cabin air pressure limit, defining a first anomalous cabin air pressure measurement; and
identifying using the CPU (102) a second received air pressure measurement from the second air pressure sensor that is below the minimum cabin air pressure movement, defining a second anomalous cabin air pressure measurement; and
operating the indication device (106) responsive to identifying a second anomalous cabin air pressure measurement.

## Patentansprüche

1. Kabinendrucksensorsystem (100) für ein Flugzeug, umfassend:
eine Vielzahl von Luftdrucksensoren (104), die in einer Flugzeugumgebung angeordnet sind, wobei die Vielzahl von Luftdrucksensoren (104) mindestens vier Sensoren umfasst und konfiguriert ist, um den Luftdruck in der Flugzeugumgebung zu messen, wobei die Vielzahl von Luftdrucksensoren (104) Folgendes umfasst:
einen ersten Luftdrucksensor, der zum Messen des Luftdrucks konfiguriert und innerhalb eines ersten druckbeaufschlagten Bereichs einer Kabine des Flugzeugs angeordnet ist; und
einen zweiten Luftdrucksensor, der zum Messen des Luftdrucks konfiguriert und innerhalb eines zweiten druckbeaufschlagten Bereichs der Kabine angeordnet ist;
eine Meldevorrichtung (106);
eine zentrale Verarbeitungseinheit (CPU) (102), die mit der Vielzahl von Luftdrucksensoren (104) und der Meldevorrichtung (106) elektrisch gekoppelt ist, wobei die CPU (102) einen festgelegten Grenzwert für einen Mindestkabinendruck umfasst und die CPU (102) zu Folgendem konfiguriert ist:
Empfangen von Luftdruckmessungen von jeweils dem ersten Luftdrucksensor und dem zweiten Luftdrucksensor, wodurch empfangene Luftdruckmessungen definiert sind;
Erkennen empfangener Luftdruckmessungen, die unter dem Grenzwert für den Mindestkabinendruck liegen, wodurch eine anomale Kabinenluftdruckmessung definiert ist;
und
Betreiben der Meldevorrichtung (106) in Reaktion auf das Erkennen einer anomalen Kabinenluftdruckmessung; und
eine Stromversorgungsvorrichtung (108), die mit der CPU, der Vielzahl von Luftdrucksensoren (104) und der Meldevorrichtung (106) elektrisch gekoppelt ist,
wobei die Vielzahl von Luftdrucksensoren (104) ferner einen dritten Luftdrucksensor umfasst, der in einem nicht druckbeaufschlagten Bereich des Flugzeugs angeordnet ist, wobei die Vielzahl von Luftdrucksensoren (104) ferner auch einen vierten Drucksensor umfasst, der in einem druckbeaufschlagten Bereich einer Kabine des Flugzeugs angeordnet ist,
wobei die CPU (102) ferner konfiguriert ist, um einen Autokalibrierungsprozess durchzuführen, und
wobei der Autokalibrierungsprozess die folgenden Schritte umfasst:
Empfangen einer externen Kalibrierungsluftdruckmessung von dem dritten Luftdrucksensor;
Empfangen, vor dem Abfliegen, einer internen Kalibrierungsluftdruckmessung von jeweils dem ersten Luftdrucksensor und dem zweiten Luftdrucksensor sowie dem vierten Drucksensor aus der Kabine des Flugzeugs, die während des Fluges druckbeaufschlagt wird, aber noch nicht druckbeaufschlagt ist;
Vergleichen der internen Kalibrierungsluftdruckmessung von jeweils dem ersten Luftdrucksensor und dem zweiten Luftdrucksensor und dem vierten Drucksensor mit der externen Kalibrierungsluftdruckmessung;
Erkennen jeglicher internen Kalibrierungsluftdruckmessungen, die außerhalb einer Kalibriertoleranz aus der externen Kalibrierungsluftdruckmessung liegen, wodurch eine Kalibrierungsanomalie definiert ist; und
Betreiben der Meldevorrichtung (106) in Reaktion auf das Erkennen einer Kalibrierungsanomalie.

2. System nach Anspruch 1, wobei der dritte Luftdrucksensor im Nasenkonus des nicht druckbeaufschlagten Bereichs des Flugzeugs angeordnet ist.

3. System nach Anspruch 1 oder 2, wobei:
die Stromversorgungsvorrichtung (108) mit einem Flugzeug-Bordnetz elektrisch gekoppelt ist; und
das Kabinendrucksensorsystem (100) von allen Flugzeugsystemen außer dem Flugzeug-Bordnetz elektrisch isoliert ist.

4. System nach einem der Ansprüche 1 bis 3, wobei die CPU (102) ferner zu Folgendem konfiguriert ist:
Erkennen einer ersten empfangenen Luftdruckmessung von dem ersten Luftdrucksensor, die unter dem Grenzwert für den Mindestkabinendruck liegt, wodurch eine erste anomale Kabinenluftdruckmessung definiert ist;
Erkennen einer zweiten empfangenen Luftdruckmessung von dem zweiten Luftdrucksensor, die unter der Mindestkabinendruck-Bewegung liegt, wodurch eine zweite anomale Kabinenluftdruckmessung definiert ist; und
Betreiben der Meldevorrichtung (106) in Reaktion auf das Erkennen einer zweiten anomalen Kabinenluftdruckmessung.

5. System nach Anspruch 1 oder 2 oder 3 oder 4, wobei die CPU (102) konfiguriert ist, um den Autokalibrierungsprozess vor dem Abfliegen des Flugzeugs durchzuführen.

6. System nach einem der Ansprüche 1 bis 5, wobei die Meldevorrichtung (106) mindestens eine von einer Anzeigevorrichtung (106'), einer Beleuchtungsvorrichtung und einer ein hörbares Signal erzeugenden Vorrichtung (106") umfasst.

7. System nach Anspruch 6, wobei:
die Meldevorrichtung (106) eine Vielzahl von Leuchtdioden (LEDs) umfasst, wobei die Vielzahl von LEDs eine erste LED, die konfiguriert ist, um Licht innerhalb eines ersten Wellenlängenbereichs im sichtbaren Spektrum abzugeben, und eine zweite LED, die konfiguriert ist, um Licht innerhalb eines zweiten Wellenlängenbereichs des Sichtbaren abzugeben, umfasst; und
die CPU (102) konfiguriert ist, um in Reaktion auf ein Nicht-Erkennen einer anomalen Kabinenluftdruckmessung die erste LED zu betreiben und in Reaktion auf ein Erkennen einer anomalen Kabinenluftdruckmessung die zweite LED zu betreiben.

8. System nach Anspruch 7, wobei die CPU (102) konfiguriert ist, um in Reaktion auf das Erkennen einer anomalen Kabinenluftdruckmessung die ein hörbares Signal erzeugende Vorrichtung (106"), die von der Meldevorrichtung (106) umfasst wird, zu betreiben.

9. System nach Anspruch 7, wobei die CPU (102) konfiguriert ist, um in Reaktion auf ein Erkennen einer anomalen Kabinenluftdruckmessung mindestens eine von einer grafischen Anzeige und einer textlichen Anzeige auf der Anzeigevorrichtung (106') der Meldevorrichtung (106) bereitzustellen.

10. Verfahren zum Überwachen eines Kabinendrucksensorsystems (100) für ein Flugzeug unter Verwendung eines Kabinenluftdrucküberwachungssystems, umfassend eine Vielzahl von Luftdrucksensoren (104), die in dem Flugzeug angeordnet sind, wobei die Vielzahl von Luftdrucksensoren (104) mindestens vier Sensoren umfasst und konfiguriert ist, um den Luftdruck in einer Flugzeugumgebung zu messen, wobei sie mindestens einen ersten Luftdrucksensor und einen zweiten Luftdrucksensor umfasst, eine Meldevorrichtung (106), eine zentrale Verarbeitungseinheit (CPU), die mit der Vielzahl von Luftdrucksensoren (104) und der Meldevorrichtung (106) elektrisch gekoppelt ist und einen Grenzwert für einen Mindestkabinendruck umfasst, und eine Stromversorgung, die mit der Vielzahl von Luftdrucksensoren, der CPU und der Meldevorrichtung (106) gekoppelt ist, wobei das Verfahren die folgenden Schritte umfasst:
Empfangen, an der CPU (102), von Luftdruckmessungen von jeweils dem ersten Luftdrucksensor und dem zweiten Luftdrucksensor, wodurch empfangene Luftdruckmessungen definiert sind;
Erkennen, unter Verwendung der CPU (102), empfangener Luftdruckmessungen, die unter dem Grenzwert für den Mindestkabinendruck liegen, wodurch eine anomale Kabinenluftdruckmessung definiert ist; und
Betreiben der Meldevorrichtung (106) in Reaktion auf das Erkennen einer anomalen Kabinenluftdruckmessung,
wobei die Vielzahl von Luftdrucksensoren (104) ferner einen dritten Luftdrucksensor umfasst, der in einem nicht druckbeaufschlagten Bereich des Flugzeugs angeordnet ist, wobei das Verfahren ferner das Durchführen eines Autokalibrierungsprozesses umfasst und die Vielzahl von Luftdrucksensoren (104) ferner auch einen vierten Drucksensor umfasst, der in einem druckbeaufschlagten Bereich einer Kabine des Flugzeugs angeordnet ist, und
wobei der Autokalibrierungsprozess die folgenden Schritte umfasst:
Empfangen, an der CPU (102), einer externen Kalibrierungsluftdruckmessung von dem dritten Luftdrucksensor;
Empfangen, an der CPU (102), einer internen Kalibrierungsluftdruckmessung von jeweils dem ersten Luftdrucksensor und dem zweiten Luftdrucksensor sowie dem vierten Drucksensor aus der Kabine des Flugzeugs, die während des Fluges druckbeaufschlagt wird, aber noch nicht druckbeaufschlagt ist;
Vergleichen, unter Verwendung der CPU (102), der internen Kalibrierungsluftdruckmessung von jeweils dem ersten Luftdrucksensor und dem zweiten Luftdrucksensor und dem vierten Drucksensor mit der externen Kalibrierungsluftdruckmessung;
Erkennen, unter Verwendung der CPU (102), jeglicher internen Kalibrierungsluftdruckmessungen, die außerhalb einer Kalibriertoleranz aus der externen Kalibrierungsluftdruckmessung liegen, wodurch eine Kalibrierungsanomalie definiert ist; und
Betreiben der Meldevorrichtung (106) in Reaktion auf das Erkennen einer Kalibrierungsanomalie.

11. Verfahren nach Anspruch 10, wobei der dritte Luftdrucksensor im Nasenkonus des nicht druckbeaufschlagten Bereichs des Flugzeugs angeordnet ist.

12. Verfahren nach Anspruch 10 oder 11, ferner umfassend:
Erkennen, unter Verwendung der CPU (102), einer ersten empfangenen Luftdruckmessung von dem ersten Luftdrucksensor, die unter dem Grenzwert für den Mindestkabinendruck liegt, wodurch eine erste anomale Kabinenluftdruckmessung definiert ist; und
Erkennen, unter Verwendung der CPU (102), einer zweiten empfangenen Luftdruckmessung von dem zweiten Luftdrucksensor, die unter der Mindestkabinendruck-Bewegung liegt, wodurch eine zweite anomale Kabinenluftdruckmessung definiert ist; und
Betreiben der Meldevorrichtung (106) in Reaktion auf das Erkennen einer zweiten anomalen Kabinenluftdruckmessung.

## Revendications

1. Système de capteur de pression de cabine (100) pour un aéronef comprenant :
une pluralité de capteurs de pression d'air (104) positionnés dans un environnement d'aéronef, la pluralité de capteurs de pression d'air (104) comprenant au moins quatre capteurs et étant configurée pour mesurer la pression d'air dans l'environnement d'aéronef, la pluralité de capteurs de pression d'air (104) comprenant :
un premier capteur de pression d'air configuré pour mesurer la pression d'air positionné dans une première zone pressurisée d'une cabine de l'aéronef ; et
un deuxième capteur de pression d'air configuré pour mesurer la pression d'air positionné dans une seconde zone pressurisée de la cabine ;
un dispositif d'indication (106) ;
une unité centrale de traitement (UCT) (102) couplée électriquement à la pluralité de capteurs de pression d'air (104) et au dispositif d'indication (106), l'UCT (102) comprenant une limite de pression de cabine minimale définie, l'UCT (102) étant configurée pour :
recevoir des mesures de pression d'air de chacun du premier capteur de pression d'air et du deuxième capteur de pression d'air, définissant des mesures de pression d'air reçues ;
identifier des mesures de pression d'air reçues qui sont inférieures à la limite minimale de pression d'air de cabine, définissant une mesure anormale de pression d'air de cabine ; et
actionner le dispositif d'indication (106) en réponse à l'identification d'une mesure de pression d'air de cabine anormale ; et
un dispositif d'alimentation électrique (108) couplé électriquement à l'UCT, à la pluralité de capteurs de pression d'air (104), et au dispositif d'indication (106),
dans lequel la pluralité de capteurs de pression d'air (104) comprend en outre un troisième capteur de pression d'air positionné dans une zone non pressurisée de l'aéronef, la pluralité de capteurs de pression d'air (104) comprenant en outre également un quatrième capteur de pression positionné dans une zone pressurisée d'une cabine de l'aéronef,
dans lequel l'UCT (102) est en outre configurée pour réaliser un processus d'auto-étalonnage, et
dans lequel le procédé d'auto-étalonnage comprend les étapes consistant à :
recevoir une mesure de pression d'air d'étalonnage externe en provenance du troisième capteur de pression d'air ;
recevoir, avant le décollage, une mesure de pression d'air d'étalonnage interne provenant de chacun du premier capteur de pression d'air et du deuxième capteur de pression d'air et du quatrième capteur de pression provenant de la cabine de l'aéronef qui sera pressurisée en vol mais n'est pas encore pressurisée ;
comparer la mesure de pression d'air d'étalonnage interne provenant de chacun du premier capteur de pression d'air et du deuxième capteur de pression d'air et du quatrième capteur de pression à la mesure de pression d'air d'étalonnage externe ;
identifier toute mesure de pression d'air d'étalonnage interne qui se trouve en dehors d'une tolérance d'étalonnage par rapport à la mesure de pression d'air d'étalonnage externe, définissant une anomalie d'étalonnage ; et
faire fonctionner le dispositif d'indication (106) en réponse à l'identification d'une anomalie d'étalonnage.

2. Système selon la revendication 1, dans lequel le troisième capteur de pression d'air est positionné dans le cône de nez de la zone non pressurisée de l'aéronef.

3. Système selon la revendication 1 ou 2, dans lequel :
le dispositif d'alimentation électrique (108) est couplé électriquement à un bus d'alimentation d'aéronef ; et
le système de capteur de pression de cabine (100) est isolé électriquement de tous les systèmes d'aéronef autres que le bus d'alimentation d'aéronef.

4. Système selon l'une quelconque des revendications 1 à 3, dans lequel l'UCT (102) est en outre configurée pour :
identifier une première mesure de pression d'air reçue du premier capteur de pression d'air qui est inférieure à la limite minimale de pression d'air de cabine, définissant une première mesure de pression d'air de cabine anormale ;
identifier une seconde mesure de pression d'air reçue provenant du deuxième capteur de pression d'air qui est inférieure au mouvement minimal de pression d'air de cabine, définissant une seconde mesure de pression d'air de cabine anormale ; et
faire fonctionner le dispositif d'indication (106) en réponse à l'identification d'une seconde mesure anormale de pression d'air de cabine.

5. Système selon la revendication 1 ou 2 ou 3 ou 4, dans lequel l'UCT (102) est configurée pour réaliser le processus d'auto-étalonnage avant le décollage de l'aéronef.

6. Système selon l'une quelconque des revendications 1 à 5, dans lequel le dispositif d'indication (106) comprend au moins l'un parmi un dispositif d'affichage (106'), un dispositif d'éclairage et un dispositif de signal auditif (106").

7. Système selon la revendication 6, dans lequel :
le dispositif d'indication (106) comprend une pluralité de diodes électroluminescentes (DEL), la pluralité de DEL comprenant une première DEL configurée pour émettre de la lumière dans une première plage de longueurs d'onde dans le spectre visible et une seconde DEL configurée pour émettre de la lumière dans une seconde plage de longueurs d'onde du visible ; et
l'UCT (102) est configurée pour commander la première DEL en réponse à l'absence d'identification d'une mesure anormale de pression d'air de la cabine et pour commander la seconde DEL en réponse à l'identification d'une mesure anormale de pression d'air de la cabine.

8. Système selon la revendication 7, dans lequel l'UCT (102) est configurée pour faire fonctionner le dispositif de signal auditif (106") compris dans le dispositif d'indication (106) en réponse à l'identification d'une mesure anormale de pression d'air de cabine.

9. Système selon la revendication 7, dans lequel l'UCT (102) est configurée pour fournir au moins l'une parmi une indication graphique et une indication textuelle sur le dispositif d'affichage (106') du dispositif d'indication (106) en réponse à l'identification d'une mesure anormale de pression d'air de cabine.

10. Procédé de surveillance d'un système de capteurs de pression de cabine (100) pour un aéronef utilisant un système de surveillance de pression d'air de cabine comprenant une pluralité de capteurs de pression d'air (104) positionnés à l'intérieur de l'aéronef, la pluralité de capteurs de pression d'air (104) comprenant au moins quatre capteurs et étant configurés pour mesurer la pression d'air dans un environnement d'aéronef, comprenant au moins un premier capteur de pression d'air et un deuxième capteur de pression d'air, un dispositif d'indication (106), une unité centrale de traitement (UCT) couplée électriquement à la pluralité de capteurs de pression d'air (104) et au dispositif d'indication (106) et comprenant une limite de pression de cabine minimale, et une alimentation électrique couplée électriquement à la pluralité de capteurs de pression d'air, à l'UCT et au dispositif d'indication (106), le procédé comprenant les étapes consistant à :
recevoir au niveau de l'UCT (102) des mesures de pression d'air en provenance de chacun du premier capteur de pression d'air et du deuxième capteur de pression d'air, définissant des mesures de pression d'air reçues ;
identifier, à l'aide de l'UCT (102), des mesures de pression d'air reçues qui sont inférieures à la limite minimale de pression d'air de cabine, définissant une mesure de pression d'air de cabine anormale ; et
faire fonctionner le dispositif d'indication (106) en réponse à l'identification d'une mesure anormale de pression d'air de cabine,
dans lequel la pluralité de capteurs de pression d'air (104) comprend en outre un troisième capteur de pression d'air positionné dans une zone non pressurisée de l'aéronef, le procédé comprenant en outre l'exécution d'un processus d'auto-étalonnage, la pluralité de capteurs de pression d'air (104) comprenant en outre également un quatrième capteur de pression positionné dans une zone pressurisée d'une cabine de l'aéronef, et
dans lequel le procédé d'auto-étalonnage comprend les étapes consistant à :
recevoir au niveau de l'UCT (102) une mesure de pression d'air d'étalonnage externe en provenance du troisième capteur de pression d'air ;
recevoir au niveau de l'UCT (102) une mesure de pression d'air d'étalonnage interne provenant de chacun du premier capteur de pression d'air et du deuxième capteur de pression d'air et du quatrième capteur de pression de la cabine de l'aéronef qui sera pressurisée en vol mais qui n'est pas encore pressurisée ;
comparer à l'aide de l'UCT (102) la mesure de pression d'air d'étalonnage interne provenant de chacun du premier capteur de pression d'air et du deuxième capteur de pression d'air et du quatrième capteur de pression à la mesure de pression d'air d'étalonnage externe ;
identifier, à l'aide de l'UCT (102), toutes mesures de pression d'air d'étalonnage interne qui sont en dehors d'une tolérance d'étalonnage par rapport à la mesure de pression d'air d'étalonnage externe, définissant une anomalie d'étalonnage ; et
faire fonctionner le dispositif d'indication (106) en réponse à l'identification d'une anomalie d'étalonnage.

11. Procédé selon la revendication 10, dans lequel le troisième capteur de pression d'air est positionné dans le cône de nez de la zone non pressurisée de l'aéronef.

12. Procédé selon la revendication 10 ou 11, comprenant en outre :
l'identification, à l'aide de l'UCT (102), d'une première mesure de pression d'air reçue en provenance du premier capteur de pression d'air qui est inférieure à la limite minimale de pression d'air de cabine, définissant une première mesure de pression d'air de cabine anormale ; et
l'identification, à l'aide de l'UCT (102), d'une seconde mesure de pression d'air reçue en provenance du deuxième capteur de pression d'air qui est inférieure au mouvement de pression d'air minimal de la cabine, définissant une seconde mesure de pression d'air anormale de la cabine ; et
le fonctionnement du dispositif d'indication (106) en réponse à l'identification d'une seconde mesure anormale de pression d'air de cabine.
